Europäisches Patentamt

European Patent Office

Office européen des brevets

(19)

(11) Numéro de publication: **0 098 451**
**B1**

(12) **FASCICULE DE BREVET EUROPEEN**

(45) Date de publication du fascicule du brevet:
**17.02.88**

(51) Int. Cl.⁴: **A 22 C 17/00**

(21) Numéro de dépôt: **83106039.7**

(22) Date de dépôt: **21.06.83**

(54) Machine pour la préparation de brochettes.

(30) Priorité: **01.07.82 FR 8211596**

(43) Date de publication de la demande:
**18.01.84 Bulletin 84/3**

(45) Mention de la délivrance du brevet:
**17.02.88 Bulletin 88/7**

(84) Etats contractants désignés:
**AT BE DE GB IT LU NL**

(56) Documents cités:
**EP - A - 0 078 232**
**FR - A - 2 494 092**
**NL - A - 6 813 550**
**US - A - 2 303 566**
**US - A - 3 691 608**

(73) Titulaire: **CHAMPAGNE VIANDE, Société Anonyme dite:,**
**Route de Saint-Dizier Zone Industrielle B.P. 131,**
**F-51304 Vitry-le-François Cedex (FR)**

(72) Inventeur: **Wachoru, Francis Michel, 2 Square des**
**Luynes Résidence Varenne, F-78150 Le Chesnay Parly II**
**(FR)**

(74) Mandataire: **Casalonga, Axel et al, BUREAU D.A.**
**CASALONGA OFFICE JOSSE & PETIT Morassistrasse 8,**
**D-8000 München 5 (DE)**

ACTORUM AG

## Description

La présente invention se rapporte à une machine pour la préparation de brochettes, notamment de brochettes comprenant des morceaux de viande et/ou d'abats enfilés sur une broche.

La préparation de telles brochettes peut s'effectuer manuellement, les morceaux de viande et/ou d'abats étant prédécoupés et enfilés individuellement sur une broche métallique ou en bois. Cette préparation artisanale entraîne des frais de main-d'œuvre considérables, tant pour le découpage préalable de la viande et/ou des abats en petits morceaux que pour l'enfilage de ces morceaux sur les broches.

Au titre de l'article 54 (3 et 4) CBE, il est fait référence au document EP-A-0 078 232.

La présente invention a pour objet une machine permettant de mécaniser dans une large mesure la préparation de telles brochettes. L'invention a également pour objet une machine permettant de réaliser des brochettes mieux calibrées que celles préparées manuellement.

La machine conforme à l'invention pour la préparation de brochettes comprend un moule de forme sensiblement parallélépipédique, constitué de quatre parois latérales et fermé par deux plaques opposées dont l'une au moins est amovible, les deux plaques opposées du moule comportant une multitude de trous de passage régulièrement répartis de manière que les trous des deux plaques soient alignés. Cette machine comprend, en outre, un porte-broches situé d'un côté dudit moule, en face de l'une desdites plaques, et comportant une multitude de logements régulièrement répartis comme lesdits trous des plaques du moule, pour recevoir une extrémité d'une multitude de broches d'une longueur supérieure à la distance entre les plaques du moule, de telle manière que lesdites broches fassent saillie sur le porte-broches en direction de ladite plaque du moule. La machine comprend, par ailleurs, un porte-pointes situé du côté opposé dudit moule, en face de l'autre desdites plaques du moule, et comportant une multitude de pointes régulièrement réparties comme les trous des plaques du moule, lesdites pointes dont une extrémité est solidaire du porte-pointes ayant une longueur supérieure à la distance comprise entre les deux plaques du moule et faisant saillie sur le porte-pointes en direction de l'autre plaque du moule. De plus, la machine comprend des moyens pour imprimer au porte-broches, au porte-pointes et au moule des mouvements relatifs suivant les axes des broches et des pointes de manière à enfoncer les pointes dans un sens à travers le moule et à retirer ensuite les pointes en sens opposé du moule en enfonçant simultanément les broches dans ce sens dans le moule tout en maintenant les extrémités libres des broches centrées sur les extrémités libres des pointes.

Après remplissage du moule à l'aide de lames de viande et/ou d'abats, la machine conforme à l'invention assure donc l'enfoncement d'une multitude de broches dans le moule, de sorte qu'il suffit ensuite de découper la viande et/ou les abats contenus dans le moule, parallèlement à l'axe des broches, pour obtenir une multitude de brochettes garnies.

Pour faciliter ce découpage, il est avantageux que le moule comporte, dans chacune de ses quatre parois latérales, une multitude de fentes parallèles s'étendant depuis l'extrémité du moule, côté plaque amovible, jusqu'à distance de l'extrémité opposée du moule et assurant le guidage d'une lame pour le découpage de la viande et/ou des abats dans le moule entre les broches, de sorte que les brochettes sont entièrement terminées à leur sortie du moule.

Afin d'assurer l'entrée correcte de l'extrémité libre des pointes dans les trous correspondants de l'une ou des deux plaques du moule, il est avantageux que lesdits trous soient évasés en direction du porte-pointes.

Suivant un mode de réalisation préféré de l'invention, le moule est fixe et le porte-pointes ainsi que le porte-broches sont déplaçables en va-et-vient par rapport au moule.

De préférence, des moyens de verrouillage sont prévus sur le porte-pointes et le porte-broches pour rendre le porte-broches solidaire du porte-pointes à la fin du mouvement d'enfoncement des pointes à travers le moule et pendant le mouvement simultané de retrait des pointes du moule et d'enfoncement des broches dans le moule.

Le porte-pointes peut être avantageusement commandé par un vérin à double effet et le porte-broches par un vérin à simple effet agissant uniquement en sens opposé au sens dans lequel les broches sont enfoncées dans le moule. Les moyens de verrouillage du porte-broches sur le porte-pointes sont alors avantageusement conçus de manière à automatiquement solidariser le porte-broches avec le porte-pointes à la fin du mouvement de ce dernier dans le sens d'enfoncement des pointes dans le moule et désolidariser le porte-broches du porte-pointes à la fin du mouvement de retrait des pointes du moule, donc d'enfoncement des broches dans le moule.

Le centrage des extrémités libres des broches sur les extrémités libres des pointes au cours du mouvement d'enfoncement des broches à travers le moule est avantageusement assuré par le fait que chaque pointe présente, à sont extrémité libre, un trou coaxial dans lequel l'extrémité libre pointue de la broche correspondante est emboîté à la fin du mouvement d'enfoncement des pointes à travers le moule et reste emboîtée pendant le mouvement simultané de retrait des pointes hors du moule et d'enfoncement des broches dans le moule.

Chaque pointe est avantageusement constituée par une tige pleine, ledit trou coaxial étant borgne et débouchant latéralement. La tige est appointée à son extrémité libre, c'est-à-dire biseautée autour dudit trou borgne pour présenter un tranchant annulaire à la manière d'un emporte-pièce. Du fait que le trou borgne axial débouche latéralement, les résidus de viande et/ou d'abats contenus dans le trou sont automatiquement expulsés.

Pour améliorer encore le guidage des broches, la machine comporte avantageusement, entre le porte-broches et ladite plaque du moule tournée vers le porte-broches, un guide-broches comportant une multitude de trous de passage uniformément répartis comme les logements pour les broches dans le porte-broches. Des moyens sont avantageusement prévus pour animer ce guide-broches, suivant les axes des broches, d'un mouvement de va-et-vient entre une position éloignée de ladite plaque du moule et une position contiguë de ladite plaque du moule. Ce guide-broches, en position contiguë de ladite plaque du moule, maintient les extrémités libres des broches exactement en face des trous prévus dans cette plaque pour le passage des extrémités libres des pointes, de sorte que lors de l'enfoncement des pointes à travers le moule, les extrémités libres évidées des pointes viennent avec certitude s'emboîter sur les extrémités libres pointues des broches en vue du centrage des extrémités libres des broches au cours du mouvement subséquent de retrait des pointes du moule et d'enfoncement des broches dans le moule.

De préférence, les moyens pour déplacer le porte-pointes, le porte-broches et le guide-broches sont des vérins à fluide et la machine comprend une commande séquentielle desdits vérins assurant, lorsque le porte-pointes, le porte-broches et le guide-broches se trouvent en position de retrait par rapport au moule, le porte-broches étant garni de broches traversant le guide-broches et le moule rempli de viande et/ou d'abats étant mis en place entre le porte-pointes et le guide-broches, le déroulement des étapes suivantes:

a) le guide-broches est amené en position contiguë de ladite plaque du moule;

b) le porte-pointes est déplacé en direction du moule pour enfoncer ses pointes à travers le moule, jusqu'à l'emboîtement sur les extrémités libres des broches guidées par le guide-broches et jusqu'au verrouillage du porte-broches sur le porte-pointes;

c) le porte-pointes est déplacé en sens opposé avec le porte-broches verrouillé sur lui, jusqu'à la sortie complète des pointes du moule et à l'enfoncement complet des broches à travers le moule, le porte-broches étant alors déverrouillé du porte-pointes;

d) le porte-broches déverrouillé du porte-pointes est éloigné du moule, sans les broches qui subsistent dans le moule, et

e) le guide-broches est éloigné du moule.

En se référant au dessin annexé, on va décrire ci-après plus en détail un mode de réalisation illustratif et non limitatif de l'objet de l'invention; sur le dessin:

la fig. 1 est une vue en élévation schématique de l'avant d'une machine conforme à l'invention de préparation de brochettes;

la fig. 2 représente, à plus grande échelle, l'extrémité libre d'une pointe et l'extrémité libre d'une brochette, montrant le centrage de cette dernière par la pointe au cours de son enfoncement à travers le moule.

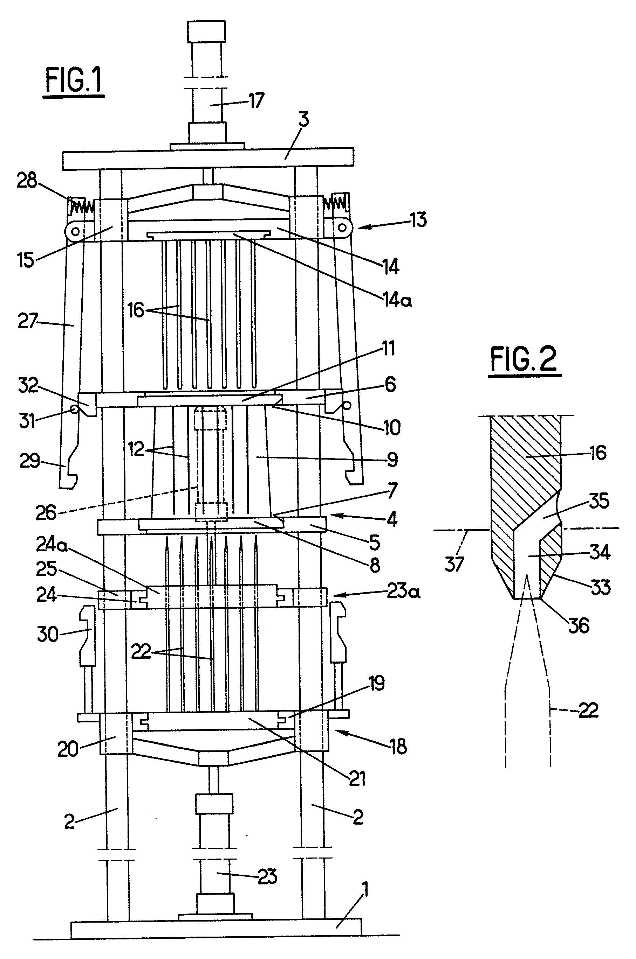

La machine de préparation de brochettes telle qu'illustrée par la fig. 1 comprend un bâti rigide composé d'une base 1 reposant sur le sol, de plusieurs colonnes verticales parallèles 2, par exemple au nombre de deux ou de préférence de quatre, fixées sur la base, et d'une structure supérieure 3 reliant entre elles les extrémités supérieures des colonnes 2.

Un ensemble de moule 4 est monté sur les colonnes 2 en étant immobilisé sur ces dernières. Cet ensemble de moule 4 comprend un cadre inférieur 5 et un cadre supérieur 6 horizontaux, fixés rigidement sur les colonnes 2, à distance verticale l'un de l'autre. Les deux cadres 5 et 6 présentent en plan une forme générale en U ouvert vers l'avant.

Le cadre inférieur 5 présente, dans chacune de ses deux ailes, une glissière horizontale 7 servant à recevoir par coulissement et à retenir vers le bas une plaque 8 servant de fond à un moule 9.

De façon analogue, le cadre supérieur 6 présente, dans chacune de ses ailes, une glissière horizontale 10 servant à recevoir et à retenir vers le haut une plaque 11 servant de couvercle à ce même moule 9.

Les deux plaques 8 et 11 sont percées d'une multitude de trous verticaux régulièrement répartis.

Le moule 9 est constitué par un ensemble de quatre parois latérales sensiblement verticales se raccordant les unes aux autres à angle droit de manière à former une enveloppe de moule rectangulaire ou de préférence carrée. De préférence, le moule 9 présente intérieurement une légère dépouille dans un sens.

Chacune des quatre parois latérales du moule 9 comporte une série de fentes 12 verticales s'étendant à des intervalles réguliers depuis une extrémité du moule 9 jusqu'à distance de l'extrémité opposée du moule.

Les deux plaques 8 et 11 comportent avantageusement l'une dans sa face supérieure et l'autre dans sa face inférieure, une rainure ayant la même forme que l'extrémité correspondante du moule 9, de sorte que les deux extrémités du moule 9 se trouvent emboîtées dans lesdites rainures des plaques 8 et 11.

Du fait de la forme en U des deux cadres 5 et 6, le moule 9, complété par les deux plaques 8 et 11, peut être glissé depuis l'avant horizontalement à la manière d'un tiroir, entre les deux cadres 5 e 6 et se trouve ainsi positionné avec précision sur le bâti de la machine.

Entre le cadre supérieur 6 de l'ensemble de moule 4 et la structure supérieure 3 du bâti de la machine, un ensemble porte-pointes 13 est monté coulissant sur les colonnes 2. Cet ensemble porte-pointes 13 comprend un cadre 14 horizontal portant des douilles de guidage 15 verticales par lesquelles le cadre 14 est monté coulissant sur les colonnes 2. Le cadre 14 porte un ensemble de pointes métalliques 16 faisant saillie verticalement vers le bas en étant réparties uniformément de la même manière que les trous des plaques 8 et 11. Dans l'exemple représenté, les pointes 16 sont maintenues sur le cadre 14 par une plaque 14a susceptible de coulisser horizontalement à la manière d'un tiroir sur le cadre 14.

Un vérin à fluide 17 à double effet monté sur la structure supérieure 3 du châssis, permet d'imprimer un mouvement vertical de va-et-vient à l'ensemble porte-pointes 13.

Entre le cadre inférieur 5 de l'ensemble de moule 4 et la base 1 du châssis, un ensemble porte-broches 18 est monté mobile verticalement sur les colonnes 2. Cet ensemble porte-broches 18 comprend un cadre horizontal 19 portant quatre douilles de guidage 20 qui permettent au cadre 19 de coulisser verticalement sur les colonnes 2. Le cadre 19 présente la forme d'un U ouvert vers l'avant et reçoit, à la manière d'un tiroir, une plaque 21 munie, dans sa face supérieure, d'une multitude de trous borgnes verticaux uniformément répartis de la même manière que les trous des plaques 8 et 11. Ces trous de la plaque 21 sont destinés à recevoir chacun une extrémité d'une broche 22, par exemple en bois, broches sur lesquelles doivent être enfilés les morceaux de viande et/ou d'abats des brochettes.

Un vérin à fluide 23 à simple effet est monté entre la base 1 du châssis et le cadre 19 du porte-broches 18. Ce vérin 23 agit uniquement de manière à faire descendre l'ensemble porte-broches 18.

Entre le cadre inférieur 5 de l'ensemble de moule 4 et l'ensemble porte-broches 18 est monté un ensemble guide-broches 23a. Cet ensemble guide-broches 23a comprend un cadre 24 horizontal en U ouvert vers l'avant, monté coulissant par des douilles de guidage 25 sur les colonnes 2. Le cadre 24 reçoit, à la manière d'un tiroir, une plaque 24a comportant une multitude de trous de passage verticaux régulièrement répartis de la même manière que les trous des plaques 8 et 11. L'ensemble guide-broches 23a est mobile verticalement en va-et-vient, entre la position représentée dans laquelle il se trouve à distance verticale en dessous du cadre inférieur 5 de l'ensemble de moule 4 et une position supérieure dans laquelle il est contigu de ce cadre inférieur 5. Le mouvement de va-et-vient est imprimé à l'ensemble guide-broches 23a par un vérin à fluide 26 à double effet monté entre le cadre supérieur 6 de l'ensemble de moule 4 et le cadre 24 de l'ensemble guide-broches 23a.

Il convient encore de remarquer que l'ensemble porte-pointes 13 porte, de chaque côté, un bras à crochet 27 articulé sur le cadre 14 et sollicité en permanence par un ressort 28. Sous l'action de ce ressort 28, le crochet 29 prévu à l'extrémité inférieure libre du bras 27 se verrouille, lorsque l'ensemble porte-pointes 13 est abaissé par le vérin 17, sur un crochet 30 monté rigidement sur le cadre 19 de l'ensemble porte-broches 18, ce verrouillage étant maintenu par le ressort 28 pendant le mouvement de montée de l'ensemble porte-pointes 13 sous l'action du vérin 18, de sorte que l'ensemble porte-broches 18 participe à ce mouvement de montée. Ce n'est qu'à la fin dudit mouvement de montée que le verrouillage est supprimé automatiquement, grâce à l'entrée en contact d'un doigt 31 prévu sur le bras 27, avec une came 32 formant rampe, montée sur le cadre 6 de l'ensemble de moule 4. Lorsque le doigt 31 entre en contact avec la came 32, le levier 27 pivote à l'encontre de l'action du ressort 28 et son crochet 29 se dégage du crochet 30 de l'ensemble porte-broches 18, libérant ainsi ce dernier.

Selon la fig. 2, les pointes 16 métalliques sont constituées par des tiges massives présentant, à leur extrémité libre appointée par un biseau 33, un trou borgne axial 34 dont le fond débouche latéralement par un trou oblique 35. La pointe 16 qui présente ainsi un tranchant annulaire 36 travaille à la manière d'un emporte-pièce.

On reconnaît par ailleurs sur la fig. 2 qui représente la pointe 16 dans sa position la plus basse que l'extrémité libre de la pointe 16 dépasse ici vers le bas la face inférieure, indiquée par un trait 37, du cadre inférieur 5 de l'ensemble de moule 4, et cela d'une valeur telle que l'extrémité libre de la pointe 16 vienne s'emboîter sur l'extrémité libre de la broche 22 maintenue par l'ensemble porte-broches 18 se trouvant en position basse. Le but de cet emboîtement apparaîtra dans la description donnée ci-après du mode de fonctionnement de la machine.

Le chargement de la machine illustrée par la fig. 1 implique le remplissage du moule avec des lames de viande et/ou d'abats et la mise en place du moule ainsi rempli dans la machine, ainsi que la mise en place, sur la machine, des broches sur lesquelles doivent être enfilés les morceaux de viande et/ou d'abats des brochettes.

Le remplissage du moule s'effectue à l'extérieur de la machine, le moule 9 étant fermé à l'une de ses extrémités par l'une des deux plaques 8, 11. Des lames de viande et/ou d'abats sont disposées dans le moule sous forme de couches superposées sur ladite plaque jusqu'au remplissage complet du moule. Le moule 9 est ensuite fermé par mise en place de l'autre plaque 11, 8.

Pendant que le moule 9 avec ses deux plaques 8 et 11 ne se trouve pas dans la machine, on enfile les broches 22 depuis le haut à travers les trous de la plaque 24a de l'ensemble guide-broches 23a dans les logements de la plaque 21 de l'ensemble porte-broches 18 de manière que les broches 22 occupent la position illustrée sur la fig. 1.

On introduit ensuite le moule 9 rempli, avec les deux plaques 8 et 11, à la manière d'un tiroir entre les cadres 5 et 6 de l'ensemble de moule 4 et on les bloque, en cas de besoin, en position à l'aide de moyens de blocage non représentés.

On déclenche ensuite la commande séquentielle de la machine, cette commande assurant le déroulement des étapes successives suivantes:

1°) alimentation du vérin 26 dans un sens pour faire monter l'ensemble guide-broches 23a contre le cadre inférieur 5 de l'ensemble de moule 4;

2°) alimentation du vérin 17 dans un sens pour faire descendre l'ensemble porte-pointes 13 et enfoncer les pointes 16 de part en part à travers le moule 9, donc à travers la viande et/ou les abats contenus dans le moule, jusqu'à la sortie de l'extrémité libre des pointes 16 de la face inférieure de la plaque 8 et à l'emboîtement de l'extrémité libre creuse des pointes 16 sur les extrémités libres des broches 22 (voir fig. 2), les bras 27 de l'ensemble porte-pointes 13 venant alors en prise avec les crochets 30 de l'ensemble porte-broches 18 pour verrouiller ce dernier sur l'ensemble porte-pointes 13;

3°) inversion de l'alimentation en fluide du vérin 17 pour faire remonter l'ensemble porte-broches 13 et, simultanément, l'ensemble porte-broches 18 qui s'y trouve verrouillé, de manière à retirer les pointes 16 du moule 9 et, en même temps, enfoncer les broches 22 guidées par les pointes 16 dans le moule, les cames 32 assurant, à la fin de ce mouvement de montée, le déverrouillage de l'ensemble porte-broches 18 d'avec l'ensemble porte-pointes 13;

4°) alimentation en fluide sous pression du vérin 23 pour faire redescendre l'ensemble porte-broches 18, sans les broches 22, et

5°) alimentation en sens inverse du vérin 26 pour faire redescendre l'ensemble guide-broches 23a.

A la fin de ce cycle complet, les différents éléments mobiles de la machine se retrouvent dans les positions selon la fig. 1, les broches 22 restant enfoncées dans le moule 9, c'est-à-dire dans la viande et/ou les abats contenus dans le moule 9.

On retire alors le moule 9 avec les plaques 8 et 11 de la machine et après avoir enlevé la plaque 11 du moule 9, on coupe la viande et/ou les abats contenus dans le moule, par exemple à l'aide d'un couteau guidé par les fentes 12, suivant deux directions orthogonales. La viande et/ou les abats sont ainsi coupés en carrés traversés en leur centre par les broches 22, de sorte que la viande et/ou les abats retirés du moule 9 après ce découpage se présentent sous la forme de brochettes comprenant des morceaux de viande et/ou d'abats de forme carrée enfilés sur les broches 22.

Il serait possible de modifier les moyens de déplacement des différents éléments mobiles. L'ensemble guide-broches mobile pourrait également être remplacé par des moyens équivalents assurant un positionnement précis des extrémités libres des broches, en vue de leur centrage sur les extrémités libres des pointes.

La commande séquentielle de la machine peut être établie pour assurer le déroulement automatique de l'ensemble du cycle ou alors, par exemple, de manière à nécessiter l'intervention d'un opérateur en cours de cycle. Cette commande fait appel à des moyens connus en soi déclenchant le déroulement de chaque étape du cycle lors de l'achèvement de l'étape précédente.

**Revendications**

1. Machine pour la préparation de brochettes, notamment de brochettes comprenant des morceaux de viande et/ou d'abats enfilés sur une broche, comprenant:

un moule (9) de forme sensiblement parallélépipédique, constitué de quatre parois latérales et fermé par deux plaques opposées (8, 11) dont l'une au moins est amovible, les deux plaques opposées (8, 11) du moule comportant une multitude de trous de passage régulièrement répartis de manière que les trous des deux plaques soient alignés;

un porte-broches (18) situé d'un côté dudit moule, en face de l'une (8) desdites plaques, et comportant une multitude de logements régulièrement répartis comme lesdits trous des plaques du moule, pour recevoir une extrémité d'une multitude de broches (22) d'une longueur supérieure à la distance entre les plaques du moule, de telle manière que lesdites broches fassent saillie sur le porte-broches en direction de ladite plaque (8) du moule;

un porte-pointes (13) situé du côté opposé dudit moule, en face de l'autre (11) desdites plaques du moule, et comportant une multitude de pointes (16) régulièrement réparties comme les trous des plaques du moule, lesdites pointes dont une extrémité est solidaire du porte-pointes ayant une longueur supérieure à la distance comprise entre les deux plaques du moule et faisant saillie sur le porte-pointes en direction de ladite autre plaque (11) du moule; et

des moyens (17, 23, 26) pour imprimer au porte-broches (18), au porte-pointes (13) et au moule (9) des mouvements relatifs suivant les axes des broches et des pointes de manière à enfoncer les pointes dans un sens à travers le moule et à retirer ensuite les pointes en sens opposé du moule en enfonçant simultanément les broches dans ce sens dans le moule tout en maintenant les extrémités libres des broches centrées sur l'extrémité libre des pointes.

2. Machine suivant la revendication 1, caractérisée par le fait que le moule comporte, dans chacune de ses quatre parois latérales, une multitude de fentes parallèles (12) s'étendant depuis l'extrémité du moule, côté plaque amovible, jusqu'à distance de l'extrémité opposée du moule et assurant le guidage d'une lame pour le découpage de la viande et/ou des abats dans le moule entre les broches.

3. Machine suivant la revendication 1 ou 2, caractérisée par le fait que lesdits trous des plaques (8, 11) du moule sont évasés en direction du porte-pointes (13).

4. Machine suivant l'une quelconque des revendications précédentes, caractérisée par le fait que le moule (9) est fixe et que le porte-pointes (13) ainsi que le porte-broches (18) sont déplaçables en va-et-vient par rapport au moule.

5. Machine suivant la revendication 4, caractérisée par le fait que des moyens de verrouillage (27, 28, 29, 30) sont prévus sur le porte-pointes (13) et le porte-broches (18) pour rendre le porte-broches solidaire du porte-pointes à la fin du mouvement d'enfoncement des pointes à travers le moule et pendant le mouvement simultané de retrait des pointes du moule et d'enfoncement des broches dans le moule.

6. Machine suivant la revendication 5, caractérisée par le fait que le porte-pointes (13) est commandé par un vérin à double effet (17) et le porte-broches (18) par un vérin à simple effet (23) agissant uniquement en sens opposé au sens dans lequel les broches sont enfoncées dans le moule, les moyens de verrouillage du porte-broches sur le porte-pointes étant conçus de manière à automatiquement solidariser le porte-broches avec le porte-pointes à la fin du mouvement de ce dernier dans le sens d'enfoncement des pointes dans le moule et désolidariser le porte-broches du porte-pointes à la fin du mouvement de retrait des pointes du moule, donc d'enfoncement des broches dans le moule.

7. Machine suivant l'une quelconque des revendications précédentes, caractérisée par le fait que chaque pointe (16) présente, à son extrémité libre, un trou coaxial (34) dans lequel l'extrémité libre pointue de la broche correspondante (22) est emboîtée à la fin du mouvement d'enfoncement des pointes à travers le moule et reste emboîtée pendant le mouvement simultané de retrait des pointes hors du moule et d'enfoncement des broches dans le moule.

8. Machine suivant la revendication 7, caractérisée par le fait que chaque pointe est constituée par une tige pleine, ledit trou coaxial (34) étant borgne et débouchant latéralement, ladite tige étant appointée à son extrémité libre, autour dudit trou borgne, pour présenter un tranchant annulaire (36) à la manière d'un emporte-pièce.

9. Machine suivant l'une quelconque des revendications précédentes, caractérisée par le fait qu'elle comprend, entre le porte-broches (18) et ladite plaque (8) du moule tournée vers le porte-broches, un guide-broches (23a) comportant une multitude de trous de passage uniformément répartis comme les logements pour les broches dans le porte-broches, ainsi que des moyens pour animer ce guide-broches, suivant l'axe des broches, d'un mouvement de va-et-vient entre une position éloignée de ladite plaque (8) du moule et une position contiguë de ladite plaque (8) du moule.

10. Machine suivant la revendication 9, caractérisée par le fait que les moyens pour déplacer le porte-pointes, le porte-broches et le guide-broches sont des vérins à fluide (17, 23, 26) contrôlés par une commande séquentielle.

11. Procédé de commande d'une machine suivant la revendication 9 ou 10, comprenant le déroulement des étapes successives suivantes, le porte-pointes, le porte-broches garni de broches et le guide-broches se trouvant en position de retrait par rapport au moule:

a) le guide-broches est amené en position contiguë de ladite plaque du moule;

b) le porte-pointes est déplacé en direction du moule pour enfoncer ses pointes à travers le moule, jusqu'à l'emboîtement sur les extrémités libres des broches guidées par le guide-broches et jusqu'au verrouillage du porte-broches sur le porte-pointes;

c) le porte-pointes est déplacé en sens opposé, avec le porte-broches verrouillé sur lui, jusqu'à la sortie complète des pointes du moule et à l'enfoncement complet des broches à travers le moule, le porte-broches étant alors déverrouillé du porte-pointes;

d) le porte-broches déverrouillé du porte-pointes est éloigné du moule, sans les broches qui subsistent dans le moule, et

e) le guide-broches est éloigné du moule.

**Claims**

1. Machine for preparing skewered products, especially skewered products comprising pieces of meat and/or offal spitted on a skewer, the said machine comprising:

a mould (9) of substantially parallelepipedic shape, consisting of four side walls and closed by means of two opposite plates (8, 11), at least one of which is removeable, the two opposite plates (8, 11) of the mould having a multiplicity of passage holes uniformly distributed in such a way that the holes in the two plates are aligned with one another;

a skewer-holder (18) located on one side of the said mould opposite one (8) of the said plates and having a multiplicity of receptacles uniformly distributed in the same way as the said holes in the plates of the mould, in order to receive one end of a multiplicity of skewers (22) of a length greater than the distance between the plates of the mould, so that the said skewers project from the skewer-holder in the direction of the said plate (8) of the mould;

a spike-holder (13) located on the opposite side of the said mould facing the other (11) of the said plates of the mould and having a multiplicity of spikes (16) uniformly distributed in the same way as the holes in the plates of the mould, the said spikes, of which one end is secured to the spike-holder, having a length greater than the distance between the two plates of the mould and projecting from the spike-holder in the direction of the said other plate (11) of the mould; and

means (17, 23, 26) for imparting to the skewer-holder (18), to the spike-holder (13) and to the mould (9) relative movements along the axes of the skewers and spikes, so as to insert the spikes through the mould in one direction and subsequently withdraw the spikes from the mould in the opposite direction, at the same time inserting the skewers into the mould in this direction, whilst keeping the free ends of the skewers centered relative to the free end of the spikes.

2. Machine according to Claim 1, characterized in that the mould possesses, in each of its four side walls, a multiplicity of parallel slits (12) which extend from the end of the mould on the same side as the removable plate to a distance from the opposite end of the mould and which ensure the guidance of a blade for cutting the meat and/or the offal in the mould between the skewers.

3. Machine according to Claim 1 or 2, characterized in that the said holes in the plates (8, 11) of the mould are widened in the direction of the spike-holder (13).

4. Machine according to any one of the preceding claims, characterized in that the mould (9) is stationary, and in that the spike-holder (13) and the skewer-holder (18) are movable to and from in relation to the mould.

5. Machine according to Claim 4, characterized in that locking means (27, 28, 29, 30) are provided on the spike-holder (13) and the skewer-holder (18), in order to fix the skewer-holder to the spike-holder at the end of the movement of insertion of the spikes through the mould and during the simultaneous movement of withdrawal of the spikes from the mould and of insertion of the skewers into the mould.

6. Machine according to Claim 5, characterized in that the spike-holder (13) is controlled by a double-acting jack (17) and the skewer-holder (18) is controlled by a single-acting jack (23) which acts solely in the direction opposite to that in which the skewers are inserted into the mould, the means of locking the skewer-holder to the spike-holder being designed so as automatically to fix the skewer-holder to the spike-holder at the end of the movement of the latter in the direction of insertion of the spikes into the mould and to separate the skewer-holder from the spike-holder at the end of the movement of withdrawal of the spikes from the mould and therefore of insertion of the skewers into the mould.

7. Machine according to any one of the preceding claims, characterized in that each spike (16) has, at its free end, a coaxial hole (34), in which the pointed free end of the corresponding skewer (22) is fitted at the end of the movement of insertion of the spikes through the mould and remains fitted during the simultaneous movement of withdrawal of the spikes from the mould and of insertion of the skewers into the mould.

8. Machine according to Claim 7, characterized in that each spike consists of a solid stem, the said coaxial hole (34) being blind and opening out laterally, the said stem being pointed at its free end round the said blind hole, so as to have an annular cutting edge (36) in the manner of a punch.

9. Machine according to any one of the preceding claims, characterized in that it possesses, between the skewer-holder (18) and the said plate (8) of the mould facing the skewer-holder, a skewer guide (23a) having a multiplicity of passage holes uniformly distributed in the same way as the receptacles for the skewers in the skewer-holder, and means for subjecting this skewer guide, along the axis of the skewers, to a reciprocating movement between a position distant from the said plate (8) of the mould and a position adjacent to the said plate (8) of the mould.

10. Machine according to Claim 9, characterized in that the means for moving the spike-holder, the skewer-holder and the skewer-guide are hydraulic jacks (17, 23, 26) controlled by means of a sequential control.

11. Process for controlling a machine according to Claim 9 or 10, involving the execution of the following successive steps, the spike-holder, the skewer-holder fitted with skewers and the skewer guide being in the retracted position relative to the mould:

a) the skewer guide is brought into a position adjacent to the said plate of the mould;

b) the spike-holder is moved in the direction of the mould in order to insert its spikes through the mould, until they fit onto the free ends of the skewers guided by the skewer guide and until the skewer-holder is locked on the spike-holder;

c) the spike-holder is moved in the opposite direction, with the skewer-holder locked to it, until the spikes emerge completely from the mould and until the skewers are inserted completely through the mould, the skewer-holder then being released from the spike-holder;

d) the skewer-holder released from the spike-holder is moved away from the mould without the skewers, which remain in the mould, and

e) the skewer guide is moved away from the mould.

**Patentansprüche**

1. Vorrichtung zum Bereiten von Fleischspiesschen, insbesondere von Fleischspiesschen, die auf einen Spiess aufgeschobene Fleischstücke und/oder Innereien aufweisen,

mit einer eine im wesentlichen quaderförmige Gestalt aufweisenden Form (9), die durch vier Seitenwände gebildet und von zwei einander gegenüberliegenden Platten (8, 11) verschlossen ist, von denen wenigstens eine abnehmbar ist, wobei die beiden gegenüberliegenden Platten (8, 11) der Form eine Vielzahl von regelmässig verteilten Durchgangsöffnungen aufweisen, derart, dass die Öffnungen in den beiden Platten aufeinander ausgerichtet sind;

mit einem auf einer Seite der Form gegenüber der einen (8) der Platten angeordneten Spiesshalter (18), der eine Vielzahl von Halterungen aufweist, die in der gleichen Weise regelmässig verteilt sind, wie die Öffnungen in den Platten der Form, um ein Ende einer Vielzahl von Spiessen (22), deren Länge den Abstand zwischen den Platten der Form übersteigt, derart aufzunehmen, dass die Spiesse in Richtung auf diese Platte (8) der Form über den Spiesshalter vorstehen;

mit einem auf der anderen Seite der Form gegenüber der anderen (11) der Platte der Form angeordneten Nadelhalter (13), der eine Vielzahl von Nadeln (16) trägt, die in der gleichen Weise regelmässig verteilt sind wie die Öffnungen der Platten der Form, wobei die Nadeln, deren eines Ende an dem Nadelhalter befestigt ist, eine Länge aufweisen, die grösser ist als der Abstand zwischen den beiden Platten der Form sowie in Richtung auf die andere Platte (11) aus dem Nadelhalter herausragen; und

mit Mitteln (17, 23, 26), um dem Spiesshalter (18), dem Nadelhalter (13) und der Form (9) Relativbewegungen entlang den Achsen der Spiesse und der Nadeln zu erteilen, sodass die Nadeln in einer Richtung durch die Form durchgetrieben und die Nadeln anschliessend zurück aus der Form in der entgegengesetzten Richtung herausgezogen werden, während gleichzeitig die Spiesse in dieser Richtung in die Form eingetrieben werden, wobei ständig die freien Enden der Spiesse auf den freien Enden der Nadeln ausgerichtet gehalten sind.

2. Vorrichtung nach Anspruch 1, dadurch gekennzeichnet, dass die Form in jeder ihrer vier Seitenwände eine Vielzahl paralleler Schlitze (12) aufweist, die sich von dem Ende der Form an der Seite der abnehmbaren Platte bis in Abstand des gegenüberliegenden Endes der Form erstrecken und eine Führung einer Schneidevorrichtung zum Zerschneiden des Fleisches und/oder der Innereien in der Form zwischen den Spiessen gewährleisten.

3. Vorrichtung nach Anspruch 1 oder 2, dadurch gekennzeichnet, dass die öffnungen in den Platten (8, 11) der Form in Richtung auf den Nadelhalter (13) aufgeweitet sind.

4. Vorrichtung nach einem der vorhergehenden Ansprüche, dadurch gekennzeichnet, dass die Form (9) ortsfest ist und der Nadelhalter (13) sowie der Spiesshalter (18) mittels einer Hin- und Herbewegung gegenüber der Form bewegbar sind.

5. Vorrichtung nach Anspruch 4, dadurch gekennzeichnet, dass an dem Nadelhalter (13) und an dem Spiesshalter (18) Verriegelungsmittel (27, 28, 29, 30) vorgesehen sind, um den Spiesshalter mit dem Nadelhalter nach Beendigung der Eindringbewegung der Nadeln durch die Form hindurch sowie während der Rückzugsbewegung der Nadeln aus der Form und dem gleichzeitigen Einstossen der Spiesse in die Form zu kuppeln.

6. Vorrichtung nach Anspruch 5, dadurch gekennzeichnet, dass der Nadelhalter (13) durch einen doppelt wirkenden Arbeitszylinder und der Spiesshalter (18) durch einen einfach wirkenden Arbeitszylinder betätigt ist, der nur entgegen der Richtung wirkt, in der die Spiesse in die Form eingetrieben werden, dass die Mittel zur Verriegelung des Spiesshalters an dem Nadelhalter in der Weise gestaltet sind, dass sie automatisch den Spiesshalter mit dem Nadelhalter am Ende der Bewegung des letzteren im Sinne des Einstossens der Nadeln in die Form kuppeln sowie den Spiesshalter von dem Nadelhalter am Ende der Rückzugsbewegung der Nadeln aus der Form, entsprechend dem Einstossen der Spiesse in die Form, zu entkuppeln.

7. Vorrichtung nach einem der vorhergehenden Ansprüche, dadurch gekennzeichnet, dass jede der Nadeln (16) an ihrem freien Ende eine koaxial verlaufende Bohrung (34) aufweist, in der am Ende der Eindringbewegung der Nadeln durch die Form das freie spitze Ende des zugehörigen Spiesses aufgenommen wird und während der Rückzugsbewegung der Nadeln aus der Form und der gleichzeitigen Eindringbewegung der Spiesse in die Form darin aufgenommen bleibt.

8. Vorrichtung nach Anspruch 7, dadurch gekennzeichnet, dass jede Nadel durch einen massiven Schaft gebildet ist, dass die koaxiale Bohrung (34) eine Blindbohrung ist und seitlich mündet und dass der Schaft an seinem freien Ende um die Blindbohrung herum zugespitzt ist, um eine ringförmige Schneide nach der Art eines Locheisens zu bilden.

9. Vorrichtung nach einem der vorhergehenden Ansprüche, dadurch gekennzeichnet, dass sie zwischen dem Spiesshalter (18) und der dem Spiesshalter zugekehrten Platte (8) der Form eine Spiessführung (23a), die eine Vielzahl von Führungsbohrungen enthält, die in der gleichen Weise verteilt angeordnet sind wie die Halterungen der Spiesse in dem Spiesshalter, sowie Mittel aufweist, um die Spiessführung entlang der Achse der Spiesse zwischen einer von der Platte (8) der Form fernen Stellung und einer der Platte (8) der Form benachbarten Stellung hin- und herzubewegen.

10. Vorrichtung nach Anspruch 9, dadurch gekennzeichnet, dass die Mittel zum Verschieben des Nadelhalters, des Spiesshalters und der Spiessführung Druckmittelzylinder sind, die durch eine Ablaufsteuerung gesteuert sind.

11. Verfahren zur Steuerung einer Vorrichtung nach Anspruch 9 oder 10, mit folgendem Bewegungsablauf, wenn sich der Nadelhalter, der mit Spiessen versehene Spiesshalter und die Spiessführung in der von der Form zurückgezogenen Stellung befinden:

a) die Spiessführung wird in eine zu der Platte der Form nahe Stellung bewegt;

b) der Nadelhalter wird, um seine Nadeln durch die Form hindurch bis zur Aufnahme der freien Enden der durch die Spiessführung geführten Spiesse und bis zur Verriegelung des Spiesshalters mit den Nadelhaltern, einzutreiben, auf die Form zubewegt;

c) der Nadelhalter wird bis zum vollständigen Austreten der Nadeln aus der Form und dem vollständigen Eindringen der Spiesse durch die Form hindurch, zusammen mit dem mit ihm verriegelten Spiesshalter in entgegengesetzter Richtung bewegt, woraufhin der Spiesshalter von dem Nadelhalter entriegelt wird;

d) der von dem Nadelhalter entriegelte Spiesshalter wird ohne die in der Form verbleibenden Spiesse von der Form wegbewegt, und

e) die Spiessführung wird von der Form wegbe- wegt.

FIG.1

FIG.2